Europäisches Patentamt

European Patent Office

Office européen des brevets

(11) Numéro de publication : **0 337 893 B1**

## (12) FASCICULE DE BREVET EUROPEEN

(45) Date de publication du fascicule du brevet :
**16.12.92 Bulletin 92/51**

(51) Int. Cl.⁵ : **F16J 15/32**

(21) Numéro de dépôt : **89401042.0**

(22) Date de dépôt : **14.04.89**

(54) **Joint d'étanchéité en cartouche.**

(30) Priorité : **14.04.88 FR 8804949**

(43) Date de publication de la demande :
**18.10.89 Bulletin 89/42**

(45) Mention de la délivrance du brevet :
**16.12.92 Bulletin 92/51**

(84) Etats contractants désignés :
**DE GB IT**

(56) Documents cités :
**DE-U- 8 612 910**
**FR-A- 2 527 297**
**GB-A- 881 607**

(73) Titulaire : **PROCAL, Société anonyme dite**
**Les Franchises**
**F-52200 Langres (FR)**

(72) Inventeur : **Hammann, Georges**
**Thivet**
**F-52800 Nogent en Bassigny (FR)**
Inventeur : **Hufnagel, Werner**
**Halden Strasse 17**
**W-7441 Grosse Bett Lingen (DE)**
Inventeur : **Fougerolle, Fabrice**
**Montlandon**
**F-52600 Chalindrey (FR)**

(74) Mandataire : **Leszczynski, André et al**
**CABINET NONY & CIE. 29 rue Cambacérès**
**F-75008 Paris (FR)**

EP 0 337 893 B1

## Description

La présente invention est relative à un joint d'étanchéité en cartouche, destiné à être monté entre un arbre et une surface cylindrique, notamment entre un essieu et un moyeu de roue de véhicule, en particulier de véhicule industriel.

Dans ce type d'application, il est usuel de monter un joint d'étanchéité en cartouche entre l'essieu et le moyeu de roue, afin d'assurer une étanchéité, d'une part pour le fluide, c'est-à-dire l'huile ou la graisse lubrifiant les roulements du moyeu, et d'autre part pour l'eau, la boue, et les autres contaminants extérieurs, notamment les poussières provenant de l'usure des garnitures de freins.

On a déjà proposé de très nombreuses configurations de tels joints d'étanchéité en cartouche, ceux-ci comportant habituellement une bague intérieure fixe solidaire de l'essieu et une bague extérieure tournante solidaire du moyeu de la roue, une étanchéité dynamique étant réalisée en général par des garnitures d'étanchéité à lèvres en contact avec des portées des bagues formant pistes de frottement.

On connait ainsi des joints comportant une première garniture d'étanchéité intérieure vis-à-vis du fluide de lubrification, comportant au moins une lèvre d'étanchéité orientée radialement vers l'intérieur en appui contre une portée cylindrique axiale intérieure du joint, et une seconde garniture d'échanchéité, extérieure, comportant deux lèvres ou plus, d'échanchéité vis-à-vis des contaminants extérieurs orientées radialement vers l'extérieur en appui contre une portée cylindrique axiale extérieure du joint. De tels joints sont décrits dans FR-A-2527297 et GB-A-881607.

On constate, dans les joints en cartouche et notamment dans le type de joint mentionné ci-dessus, que des élévations de température, inévitables en cours de fonctionnement, provoquent des surpressions à l'intérieur du joint se traduisant par des contraintes sur les lèvres des garnitures d'étanchéité et une détérioration du fonctionnement du joint.

La présente invention se propose de réaliser un joint d'étanchéité évitant les inconvénients des joints antérieurement connus, notamment dans le cas des surpressions, et assurant une étanchéité parfaite et fiable en fonctionnement vis-à-vis des milieux environnants, c'est-à-dire lors d'une utilisation entre un essieu et un moyeu de roue, vis-à-vis du fluide de lubrification d'une part, et vis-à-vis des contaminants extérieurs tels que la boue, l'eau et la poussière provenant notamment des garnitures de freins d'autre part.

Les caractéristiques du joint d'étanchéité selon l'invention font l'objet de la revendication 1.

De préférence les lèvres de la garniture d'étanchéité extérieure inclinées, de préférence d'un angle compris entre environ 20° et environ 50° par rapport à l'axe du joint, en direction de la face frontale du joint.

La garniture d'étanchéité intérieure comporte avantageusement, outre la ou les lèvres d'étanchéité en appui contre la portée cylindrique axiale intérieure de la bague intérieure, au moins une lèvre supplémentaire orientée radialement vers l'extérieur en appui contre la portée radiale frontale de la bague intérieure.

On comprend que, selon l'invention, l'orientation des lèvres de la garniture d'étanchéité extérieure, et le cas échéant de la lèvre supplémentaire de la garniture d'étanchéité intérieure, fait qu'en cas de surpression, l'air peut s'échapper en cours de fonctionnement librement vers l'extérieur par le canal annulaire extérieur du joint.

Dans le but de mieux faire comprendre l'invention on va maintenant en décrire, à titre d'exemple en aucune manière limitatif, un mode de réalisation en se référant au dessin annexé dans lequel :

- la figure 1 est une vue en coupe d'un joint d'étanchéité selon l'invention à l'état monté entre un essieu et un moyeu de roue de véhicule,
- la figure 2 est une vue en coupe partielle agrandie du joint d'étanchéité utilisé dans la figure 1.

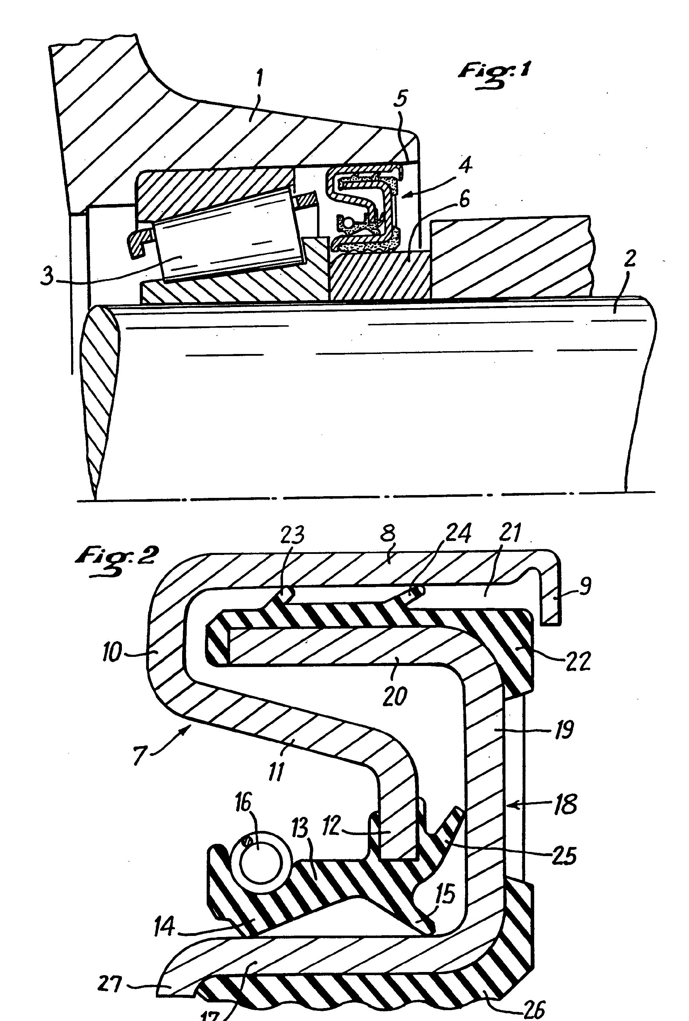

On a illustré sur la figure 1 le montage du moyeu 1 d'une roue de véhicule sur un essieu 2 par l'intermédiaire d'un roulement 3 avec utilisation d'un joint selon l'invention désigné globalement par 4 et monté entre une portée cylindrique 5 du moyeu et une bague 6 solidaire de l'essieu 2.

Les détails de structure du joint selon l'invention ressortent le mieux de l'examen de la figure 2.

Le joint comporte une bague extérieure métallique 7 comportant une portée extérieure cylindrique axiale 8 munie d'une extrémité recourbée 9 pour son sertissage à la bague intérieure, et se raccordant à son autre extrémité par une portée sensiblement radiale 10 à une portée inclinée 11 terminée par une portée radiale 12 sur laquelle est adhérisée une garniture d'étanchéité 13, par exemple en NBR, comportant une lèvre principale d'étanchéité 14 et une lèvre secondaire 15. Un ressort jarretière 16 applique la lèvre 14 contre une portée cylindrique axiale intérieure 17 de la bague métallique intérieure du joint, désignée globalement par 18, de section sensiblement en forme de U, comportant, d'un seul tenant avec la portée 17, une portée radiale 19 et une portée cylindrique axiale extérieure 20. Un canal annulaire 21 se trouve ménagé entre la portée 20 de la bague intérieure et la portée 8 en regard de la bague extérieure.

Ce canal 21 débouche sur la face frontale du joint (à droite sur le dessin) c'est-à-dire à l'opposé de la face du joint tournée vers le fluide vis-à-vis duquel l'étanchéité doit être réalisée, notamment l'huile de lubrification du roulement 3 illustré à la figure 1.

Sur la portée 20 de la bague intérieure, est adhérisée une garniture d'étanchéité extérieure 22, notamment en NBR, réalisant une étanchéité vis-à-vis de contaminants extérieurs, et comportant dans l'exemple illustré deux lèvres 23,24 orientées radialement vers l'extérieur et en direction de la face frontale du joint. Ces lèvres font avec l'axe du joint un angle de l'ordre de 45° et sont en appui contre la portée 8 de la bague extérieure.

La garniture d'étanchéité intérieure 13 comporte, dans l'exemple illustré, une lèvre supplémentaire 25 orientée radialement vers l'extérieur et en direction de la face frontale du joint, en appui contre la portée radiale frontale 19 de la bague intérieure, cette lèvre 25 faisant avec l'axe du joint un angle de l'ordre de 45°.

Enfin, la portée cylindrique axiale intérieure 17 de la bague intérieure comporte une garniture d'étanchéité nervurée 26, notamment en caoutchouc destinée à venir au contact de la bague 6, et une partie d'extrémité recourbée 27 permettant un montage facile des lèvres d'étanchéité 14 et 15 sur la portée 17.

De façon avantageuse, on fait en sorte que l'effort d'emmanchement de la bague extérieure 7 dans le moyeu soit supérieur à l'effort d'emmanchement de la bague intérieure 18 sur la bague 6 solidaire de l'essieu. Cette caractéristique assure que lorsque l'on démonte le moyeu de la roue la bague extérieure 7 reste en place sur ce dernier et la bague intérieure 18 se trouve entraînée par suite du sertissage en 9 entraînant simultanément la bague 6 et le roulement.

Pour réaliser le montage, on met en place le joint complet comportant les bagues intérieure et extérieure, à la presse, après le roulement 3 la bague intérieure 18 étant forcée sur la bague 6 par l'intermédiaire du roulement 3.

Les lèvres extérieures 23,24 orientées dans le sens du montage évitent toute surpression lors de ce montage et ne peuvent se retourner. En outre, elles assurent un maintien en position avant, avant que l'extrémité 9 ne soit recourbée, une tentative de séparation des deux bagues créant une dépression suffisante pour empêcher le démontage.

## Revendications

1. Joint d'étanchéité en cartouche, destiné à être monté entre un arbre et une surface cylindrique, notamment entre un essieu et un moyeu de roue de véhicule, du type comportant une bague intérieure (18) et une bague extérieure (7) susceptibles de tourner l'une par rapport à l'autre, une première garniture d'étanchéité, intérieure (13) comportant au moins une lèvre d'étanchéité (14,15) orientée radialement vers l'intérieur en appui contre une portée cylindrique axiale intérieure (17) du joint, et une seconde garniture d'étanchéité, extérieure (22), comportant au moins deux lèvres d'étanchéité (23,24) orientées radialement vers l'extérieur en direction de la face frontale du joint en appui contre une portée cylindrique axiale extérieure (8) du joint, **caractérisé par** le fait que la bague intérieure (18) présente une section sensiblement en forme de U dont l'âme constitue une portée radiale frontale (19) du joint et dont les ailes constituent une portée cylindrique axiale extérieure (20), sur laquelle est réalisée la garniture d'étanchéité extérieure (22), et respectivement la portée cylindrique axiale intérieure (17) en appui de laquelle viennent la ou les lèvres (14, 15) de la garniture d'étanchéité intérieure (13), les lèvres (23,24) de la garniture d'étanchéité extérieure (22) étant disposées dans un canal annulaire (21) formé entre lesdites portées cylindriques axiales extérieures (8,20) de la bague extérieure (7) et de la bague intérieure (18).

2. Joint d'étanchéité selon la revendication 1, caractérisé par le fait que lesdites lèvres (23,24) de la garniture d'étanchéité extérieure (22) sont inclinées d'un angle compris entre environ 20° et environ 50° par rapport à l'axe du joint.

3. Joint d'étanchéité selon la revendication 1 ou 2, caractérisé par le fait que la garniture d'étanchéité intérieure (13) comporte au moins une lèvre supplémentaire (25) orientée radialement vers l'extérieur en appui contre la portée radiale frontale (19) de la bague intérieure (18).

## Patentansprüche

1. Dichtungskartusche zum Einbau zwischen einer Welle und einer Zylinderfläche, insbesondere zwischen Achse und Nabe eines Fahrzeugrades, umfassend einen Innenring (18) und einen Außenring (7), die relativ zueinander drehbar sind, eine erste, innere Dichtanordnung (13) mit mindestens einer radial nach innen weisenden, an einem inneren axialen Zylinderabschnitt (17) der Dichtung anliegenden Dichtlippe (14, 15), und eine zweite, äußere Dichtanordnug (22) mit mindestens zwei in Richtung der Stirnfläche der Dichtung radial nach außen weisenden, an einem äußeren axialen Zylinderabschnitt (8) der Richtung anliegenden Dichtlippen (23, 24), dadurch gekennzeichnet, daß der Innenring (18) im wesentlichen U-förmigen Querschnitt hat, dessen Steg einen radialen stirnseitigen Abschnitt (19) der Dichtung und dessen Schenkel einen äußeren axialen Zylinderabschnitt (20), an dem die äußere Dichtanordnung (22) angeordnet ist, bzw. einen inneren axialen Zylinderabschnitt (17) bilden, an dem die Lippe bzw. Lippen (14, 15) der inneren Dichtanordnung (13) anliegen, wobei die Lippen (23, 24) der äußeren Dichtanordnung (22) in einem zwischen den äußeren axialen Zylinderabschnitten (8, 20) des Außenrings (7) und des Innenrings (18) vorhandenen Ringraum (21) liegen.

2. Dichtung nach Anspruch 1, dadurch gekennzeichnet, daß die Lippen (23, 24) der äußeren Dichtanordnung (22) unter einem Winkel zwischen etwa 20° und etwa 50° zur Achse der Dichtung geneigt sind.

3. Dichtung nach Anspruch 1 oder 2, dadurch gekennzeichnet, daß die innere Dichtanordnung (13) mindestens eine zusätzliche, radial nach außen weisende und an dem radialen stirnseitigen Abschnitt (19) des Innenrings (18) anliegende Lippe (25) aufweist.

**Claims**

1. Seal in cartridge form intended for mounting between a shaft and a cylindrical surface, in particular between an axle and a hub of a vehicle wheel, of the type comprising an inner ring (18) and an outer ring (7) capable of rotating relative to one another, a first, inner packing (13) comprising at least one sealing lip (14, 15) oriented radially towards the inside and bearing against an inner, axial, cylindrical bearing surface (17) of the seal, and a second, outer packing (22) comprising at least two sealing lips (23, 24) oriented radially towards the outside in the direction of the front face of the seal bearing against an outer, axial, cylindrical bearing surface (8) of the seal, characterised in that the inner ring (18) has a cross-section substantially in the form of a U, the web of which forms a front radial bearing surface (19) of the seal and the legs' of which respectively form an outer, axial, cylindrical bearing surface (20) on which the outer packing (22) is formed and the inner, axial, cylindrical bearing surface (17) with which the lip or lips (14, 15) of the inner packing (13) come into contact, the lips (23, 24) of the outer packing (22) being arranged in an annular channel (21) formed between the said outer, axial, cylindrical bearing surfaces (8, 20) of the outer ring (7) and of the inner ring (18).

2. Seal according to Claim 1, characterised in that the said lips (23, 24) of the outer packing (22) are inclined by an angle of between about 20° and about 50° relative to the axis of the seal.

3. Seal according to Claim 1 or 2, characterised in that the inner packing (13) comprises at least one supplementary lip (25) oriented radially towards the outside and bearing against the front radial bearing surface (19) of the inner ring (18).

EP 0 337 893 B1

Fig:1

Fig:2

5